(19) Europäisches Patentamt European Patent Office Office européen des brevets

(11) **EP 4 009 481 B1**

(12) **FASCICULE DE BREVET EUROPEEN**

(45) Date de publication et mention de la délivrance du brevet:
**03.05.2023 Bulletin 2023/18**

(21) Numéro de dépôt: **21212095.0**

(22) Date de dépôt: **02.12.2021**

(51) Classification Internationale des Brevets (IPC):
**H02J 7/00** *(2006.01)*

(52) Classification Coopérative des Brevets (CPC):
**H02J 7/0071; H02J 7/007182;** Y02E 60/10

(54) **PROCEDE DE GESTION D'UN ACCUMULATEUR POUR UN VIEILLISSEMENT OPTIMISE**

VERFAHREN ZUR VERWALTUNG EINES AKKUMULATORS FÜR EINE OPTIMIERTE ALTERUNG

METHOD FOR MANAGING AN ACCUMULATOR FOR OPTIMISED AGEING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.12.2020 FR 2012616**

(43) Date de publication de la demande:
**08.06.2022 Bulletin 2022/23**

(73) Titulaire: **Commissariat à l'Energie Atomique et aux Energies Alternatives 75015 Paris (FR)**

(72) Inventeur: **KLEIN, Jean-Marie 38054 GRENOBLE Cedex 09 (FR)**

(74) Mandataire: **Atout PI Laplace Immeuble "Visium" 22, avenue Aristide Briand 94117 Arcueil Cedex (FR)**

(56) Documents cités:
**WO-A1-2015/015083 WO-A1-2019/121756 FR-A1- 2 994 772 US-A1- 2004 066 171**

**Description**

Le domaine technique de l'invention est celui des accumulateurs tels que des accumulateurs Li-ion. La présente invention concerne plus particulièrement un procédé permettant la gestion d'un tel accumulateur, dans l'objectif d'en limiter la dégradation et d'en augmenter la durée de vie dans un fonctionnement où ledit accumulateur a été surdimensionné.

Les accumulateurs ou accumulateurs lithium - dans leurs différentes variantes telles que les accumulateurs « lithium-ion », « lithium-ion-polymère », « lithium-métalpolymère » etc... - sont les accumulateurs présentant une des plus grandes densités d'énergie et une des plus grandes énergies spécifiques. Il s'agit donc de la technologie de choix pour l'alimentation de nombreuses applications (véhicules électriques ou hybrides, dispositifs portables etc...).

Cependant, il est connu que ces accumulateurs, encore dénommés couramment batteries, présentent une dégradation de leurs performances - et notamment de leur capacité et résistance - au cours du temps, et cela même pendant les périodes de non utilisation. Par conséquent, la prise en compte de l'évolution prévisionnelle des performances des accumulateurs présente de nombreux avantages à différents niveaux au sein d'un système (dimensionnement, maintenance, stratégies de pilotage, etc...) comme proposé par exemple dans WO 2015/015083 A1 qui décrit le préambule de la revendication indépendante 1.

La présente invention propose de s'intéresser à la prise en compte de la dégradation vis-à-vis de la stratégie de pilotage de l'accumulateur.

De manière générale, les performances des accumulateurs peuvent être déterminées grâce à la mise en place d'indicateurs tels que le paramètre d'état de santé, couramment dénommé "SOH" pour "State Of Health", calculé via les signaux physiques mesurés directement sur l'accumulateur.

De manière générale, on considère également que l'état de charge (SOC) d'un accumulateur est défini par l'équation (1) :

$$SOC(i+1) = SOC(i) + \frac{I \cdot \Delta t}{C_{ref}} \qquad (eq\ 1)$$

avec :

- $I$ : courant ayant circulé entre i et i+1 en $[A]$ ;
- $C_{ref}$ : capacité de l'accumulateur en [Ah] à l'instant i ;
- $\Delta t$ : durée entre i et i+1 en [h].

La capacité $C_{ref}$ de l'accumulateur est calculée par l'équation2.

$$C_{ref} = C_{nom} \cdot SOH \qquad (eq\ 2)$$

Avec :

- SOH : « State of Health » : état de santé de l'accumulateur ;
- $C_{nom}$ : capacité initiale de l'accumulateur en [Ah].

Les fabricants d'accumulateurs précisent généralement des limites d'utilisation en tension [V] au-delà desquelles il n'est pas recommandé d'utiliser l'accumulateur. Ces limites peuvent être appelées $U_{min}$ (limite basse) et $U_{max}$ (limite haute).

Au niveau du pack accumulateur comprenant un ensemble d'accumulateurs, certains fabricants précisent également des limites d'état de charge minimale et maximale qui permettent notamment de limiter la dégradation de l'accumulateur au cours de son utilisation, respectivement référencées $SOC_{min}$ et $SOC_{max}$.

En règle générale, le dimensionnement initial de l'accumulateur est fait de telle sorte qu'il puisse assurer sa fonction même après un certain nombre d'années d'utilisation. Le dimensionnement initial prend donc en compte un facteur de vieillissement pour une durée de vie déterminée et en début de vie, l'accumulateur est donc surdimensionné par rapport au besoin d'énergie.

Par ailleurs et sans système de gestion optimale, l'accumulateur est généralement ramené en permanence à pleine charge après utilisation d'où un fonctionnement global à haut état de charge. Or il est connu que cette façon de procéder a pour conséquence de provoquer un vieillissement prématuré et donc une perte de capacité accrue de l'accumulateur.

Pour limiter ce type de vieillissement plusieurs approches ont été proposées :

Ainsi le document US 2004/0066171 A1 décrit un procédé pour ajuster l'état de charge d'un accumulateur équipant un appareil mobile tel qu'un téléphone portable, un ordinateur portable ou un appareil photo numérique, en fonction de l'emploi du temps de l'utilisateur de l'appareil. En particulier, l'accumulateur est complètement chargé lorsqu'il est prévu un besoin élevé d'autonomie. Inversement, l'accumulateur est placé dans un état de charge plus faible lorsqu'il est prévu de connecter l'appareil à une source d'alimentation externe. Cette approche est intéressante mais nécessite de connaitre à l'avance l'usage. Dans cette demande de brevet l'accumulateur est dimensionné pour satisfaire un usage maximal et va vieillir entraînant une autonomie de plus en plus faible. De sorte que le service rendu en début et en fin de vie n'est pas identique.

La demande de brevet WO2019121756 vise à répondre au besoin en proposant un procédé de gestion d'un état de charge d'un accumulateur laissé au repos et subissant des pertes de capacité au cours du temps. Là encore une partie du problème semble résolu mais d'une part l'accumulateur est laissé au repos la plupart du temps avec des cyclages très périodiques et d'autre part le procédé de gestion décrit nécessite d'avoir recours à un certain nombre d'étapes de caractérisation répétées périodiquement.

Dans ce contexte pour résoudre les problèmes précités et notamment le fait qu'un accumulateur soumis à un profil électrique de sollicitation non pourvu d'une gestion ou stratégie d'utilisation risque un vieillissement prématuré et/ou de faire défaut au cours de son utilisation, la présente invention a pour objet un procédé de gestion optimisée de l'accumulateur en prenant en compte son vieillissement sans avoir besoin d'avoir recours à la connaissance de son état de santé couramment dénommé SOH pour « State Of Heath ».

En effet, le vieillissement de l'accumulateur peut être suivi avec l'évolution du paramètre de charge SOC(t) dépendant de l'état de santé évoluant au cours du temps SOH(t), et dépendant également de paramètres constants tels que les paramètres $SOC_{max\_user}$ : limite de SOC haute définie par l'utilisateur [%] selon l'application et l'usage prévu et le paramètre $SOC_{max\_BMS}$ : limite de SOC haute définie dans le système de contrôle de l'accumulateur encore couramment dénommé « Battery Management System » ou « BMS » en anglais et défini par le fabricant.

Le Demandeur propose plus précisément de travailler sur des niveaux de tension. En effet au cours du vieillissement de l'accumulateur, sa résistance interne Ri augmente, conduisant à une évolution des tensions dudit accumulateur.

Plus précisément, la présente invention a pour objet un procédé de gestion de la tension maximale d'utilisation d'un accumulateur $U_{max}$ (t) au cours du temps apte à fonctionner pour un profil applicatif de charge et de décharge, ledit accumulateur étant prédéterminé pour fonctionner entre une tension initiale maximale d'utilisation $U_{max\_user}$ correspondant à une tension de charge maximale et une tension initiale minimale d'utilisation $U_{min\_user}$ correspondant à une tension de fin de décharge maximale, dépendantes de l'application et ledit accumulateur étant couplé à un système de contrôle de l'accumulateur (BMS) dans lequel est définie par le fabricant une tension maximale de fonctionnement $U_{max\_BMS}$ pour ledit accumulateur caractérisé en ce qu'il comporte les étapes suivantes permettant de faire évoluer au cours du temps ladite tension maximale d'utilisation $U_{max}$ (t) :

- la détermination d'un profil applicatif définissant une succession de charges et de décharges ;

- le suivi de la tension de l'accumulateur U(t) au cours des charges et des décharges, suivi au cours duquel sont opérés :

  ◦ lorsque la tension U(t) de fin de décharge devient inférieure à la tension $U_{min\_user}$, le déclenchement d'une charge lente de manière à atteindre à nouveau la tension $U_{min\_user}$ suivie d'une opération de charge maximale conduisant à une nouvelle tension maximale d'utilisation $U_{max}$ (t) supérieure à la tension initiale $U_{max\_user}$.

Selon des variantes de l'invention, le procédé de gestion comprend une série d'ensemble d'étapes successives suivantes, chaque ensemble étant de durée $E_k$ comprise entre un instant $t_k$ et un instant $t_{k+1}$, chaque ensemble d'étapes comprenant, avec $0 \leq k \leq N$ :

- une succession de charges et de décharges jusqu"à atteindre une tension de fin de décharge $U_i(t)$ inférieure à la tension $U_{min\_user}$ ;

- l'application d'une charge lente CQLi de manière à atteindre à nouveau la tension $U_{min\_user}$ ;

- l'application de la charge maximale, conduisant à une nouvelle tension maximale d'utilisation $U_{max,i+1}(t)$ supérieure à la tension initiale $U_{max\_user}$

- la tension maximale d'utilisation $U_{max,N}$ (t) dudit accumulateur étant égale à $U_{max\_BMS}$.

Selon des variantes de l'invention, la charge lente est égale à C/20, C étant la charge correspondant à la tension $U_{max\_user}$.

Selon des variantes de l'invention, le procédé de gestion comprend des étapes de comptages en ampère heure lors des changements de palier de tension correspondants au dépassement de la tension $U_{min\_user}$.

Selon des variantes de l'invention, le paramètre $U_{max\_user}$ est déterminé à partir du paramètre $SOC_{max\_user}$, ledit paramètre $SOC_{max\_user}$ étant déterminé en fonction des paramètres suivants :

○ le profil d'usage ;

○ le surdimensionnement dudit accumulateur ;

○ le vieillissement dudit accumulateur en fonction de l'état de charge de l'accumulateur SOC.

Selon des variantes de l'invention, la détermination du paramètre $SOC_{max\_user}$ comprend les étapes suivantes :

- la détermination du profil d'usage exprimé par le paramètre SOC au cours du temps ;

- la détermination du surdimensionnement dudit accumulateur de manière à définir un $SOC_{min-user}$ minimum;

- la détermination du vieillissement prédéterminé en fonction du paramètre SOC définissant par valeurs de SOC croissantes au moins :

    • une zone de travail à vieillissement modérément accéléré sur un intervalle $\Delta_1 SOC$ ;

    • une zone intermédiaire de travail confortable avec faibles variations de paramètres de vieillissement sur un intervalle $\Delta_2 SOC$, la valeur $SOC_{max-user}$ minimum étant comprise dans ledit intervalle ;

    • une zone de travail à vieillissement accéléré sur un intervalle $\Delta_3 SOC$

- la détermination d'une valeur de $SOC_{max-user}$ optimisé par l'équation :

$$SOC_{max-user} \text{ optimisé} = SOC_{max-user} \min + \Delta_1 SOC.$$

Selon des variantes de l'invention, l'accumulateur est surdimensionné pour permettre le bon fonctionnement de l'application à une échéance de temps choisie en fonction du vieillissement.

D'autres caractéristiques et avantages de l'invention apparaîtront à l'aide de la description qui suit, faite en regard de dessins annexés qui représentent :

[FIG.1] illustre un exemple de profil applicatif choisi dans le cadre de la présente invention avec un accumulateur surdimensionné de 50% pour une décharge maximale de 10 Ah ;

[FIG.2] illustre le profil applicatif faisant apparaître le vieillissement dudit accumulateur surdimensionné comportant un accroissement de sa résistance interne et montrant le dépassement de la tension minimale d'utilisation en deçà de la valeur initiale minimale d'utilisation $U_{min,user}$;

[FIG.3] illustre le profil applicatif montrant l'application d'une charge lente à partir du point de fonctionnement relatif au dépassement de la tension minimale d'utilisation en deçà de la valeur initiale minimale d'utilisation $U_{min,user}$;

[FIG.4] illustre le profil applicatif montrant l'application d'une pleine charge après l'application de la charge lente atteignant une nouvelle tension maximale d'utilisation $U_{max,1}$ ;

[FIG.5] illustre le profil applicatif montrant un nouvel ensemble d'opérations de charges et de décharges au cours du vieillissement de l'accumulateur avec nouveau passage de la tension minimale en deçà de la tension $U_{min,user}$ et application d'une nouvelle charge lente, puis d'une nouvelle pleine charge conduisant à une deuxième tension maximale d'utilisation $U_{max,2}$ ;

FIG.6] illustre un exemple de profil d'usage du paramètre d'état de charge SOC en fonction du temps dans le cas d'un accumulateur non sur-dimensionné ;

[FIG.7] illustre un exemple de profil d'usage du paramètre d'état de charge SOC en fonction du temps dans le cas d'un accumulateur surdimensionné ;

[FIG.8] illustre un exemple de profil de vieillissement en fonction du paramètre d'état de charge SOC ;

[FIG.9] illustre le même exemple de profil de vieillissement en fonction du paramètre d'état de charge SOC que celui illustré en figure 8 et mettant en évidence le paramètre $SOC_{max-user}$ minimum préalablement défini ;

[FIG.10] illustre le même exemple de profil de vieillissement en fonction du paramètre d'état de charge SOC que celui illustré en figure 9 et mettant en évidence le paramètre $SOC_{max-user}$ chois

Selon la présente invention, le procédé de gestion repose sur les principes suivants :
Il est possible de suivre le vieillissement d'un accumulateur, en suivant l'évolution en fonction du temps du paramètre de charge $SOC(t)$ et du paramètre de vieillissement $SOH(t)$. Ceci nécessite de mesurer la quantité d'Ah transitée mais aussi de connaitre avec précision le paramètre SOH. Autant la maitrise des Ah est maintenant quasi de série dans tous les "BMS" autant la connaissance du paramètre SOH reste un paramètre moins implémenté. La présente invention propose une solution consistant à travailler sur des niveaux de tension pour éviter d'avoir recours à ce paramètre et de suivre le paramètre de tension compris notamment entre les seuils hauts $U_{max,user}$ et bas $U_{min,user}$ en tension qui constituent les limites d'utilisation de l'accumulateur.

En vieillissant la résistance interne $R_i$ de la batterie augmente. Dès lors une décharge maximale conduit à repousser la tension minimale en dehors de la limite basse de tension prévue $U_{min,user}$. Selon le procédé de la présente invention, ceci va conduire à une nouvelle tension haute qui va remplacer l'ancienne limite initiale $U_{max,user}$, avant de poursuivre le processus.

On réitère ainsi de suite les opérations jusqu'à atteindre la tension maximale de l'accumulateur en charge. Dès lors et comme précédemment afin d'utiliser l'intégralité de l'énergie de l'accumulateur, le procédé de gestion est stoppé et on fonctionne entre une tension maximale $U_{max,user}$ et une tension minimale $U_{min,user}$.

Les paramètres de tension $U_{max}$ et $U_{min}$ initiaux sont définis de telle sorte qu'ils correspondent aux seuils $SOC_{max\_user}$ et $SOC_{min}$ définis précédemment. Le procédé de la présente invention peut avantageusement utiliser des mesures de tension et un comptage ampère heure lors des changements de palier de tension. Le but recherché est de monter progressivement l'état de fin de charge en fonctionnement afin de ralentir le vieillissement de l'accumulateur tout en utilisant des capteurs généralement installés comme des capteurs de tension ou de courant. Il permet aussi de s'affranchir de la valeur de SOH qui est un indicateur généralement complexe à mettre en oeuvre dans les "BMS".

Ce comportement est décrit ci-après dans le cas d'un exemple relatif à un profil d'utilisation donné avec un accumulateur de 20Ah surdimensionné de 50% pour une application donnée.

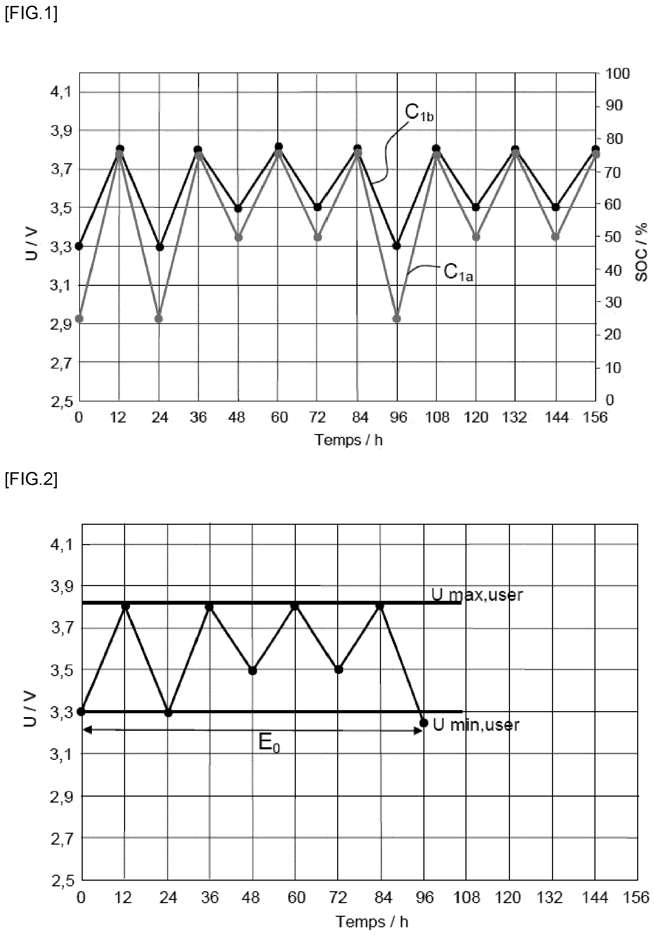

Dans le présent exemple, on définit le profil applicatif suivant :
Un cycle sur 3 jours avec le premier jour, une décharge maximale, le deuxième jour : une décharge maximale divisée par 2, le troisième jour : une décharge maximale divisée par 2. Le quatrième jour, après une opération de charge complète, on procède à une opération de décharge complète comme le montre la figure 1 qui illustre le profil applicatif choisi (la courbe $C_{1a}$ est relative à l'utilisation pleine charge d'un accumulateur non surdimensionné, la courbe $C_{1b}$ est relative à l'utilisation de l'accumulateur surdimensionné à 50%, ces courbes montrant l'évolution de la tension au cours du temps).

Tel qu'utilisé ici, un profil applicatif peut faire référence à une succession d'opérations de charge et de décharge de l'accumulateur. Un profil applicatif peut aussi faire référence à une succession d'opérations de charge uniquement ou à une succession d'opérations de charge uniquement. Par exemple, un profil applicatif peut comprendre deux phases, une phase comprenant une succession d'opérations de décharges successives sans opération de charge intermédiaire, puis une phase comprenant une opération de charge.

Le paramètre $U_{max-user}$ est défini à partir du paramètre $SOC_{max-user}$ qui est préalablement déterminé. Un exemple de détermination de ce paramètre sera décrit plus en détails dans la suite de la présente description.

Le paramètre $U_{min,user}$ est déterminé par une décharge maximale d'application $Dch_{max\ application}$ à partir de $U_{max,user}$ (pouvant typiquement être égale à 3.3V équivalent à 25% de SOC)

La figure 2 illustre l'évolution du profil applicatif (évolution de la tension en fonction du temps) intégrant le phénomène de vieillissement de l'accumulateur au cours du temps. Au bout de premier cycle complet, le phénomène de vieillissement génère l'apparition d'une tension de fin de décharge inférieure à la tension $U_{min,user}$. Ce premier cycle définit un ensemble initial d'opérations de charges et de décharges successives sur une durée de temps $E_0$.

Selon le procédé de gestion de la présente invention, il est proposé de procéder à partir de cet instant à une charge dite lente correspondant à une charge sans impact de la résistance interne sur la tension pendant une durée

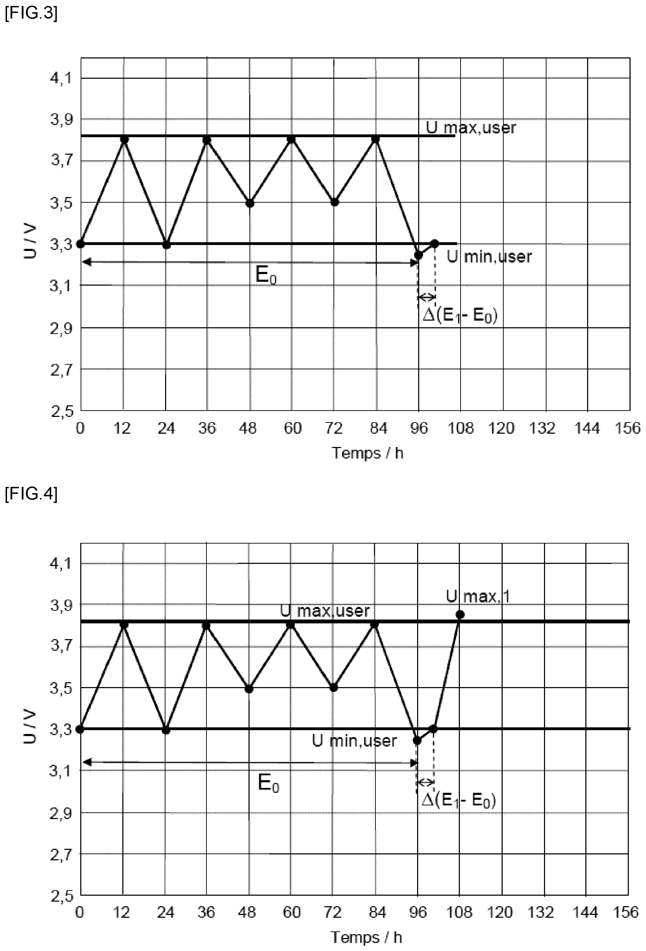

$\Delta(E_1-E_0)$. Typiquement cette charge peut avoir une valeur relative de C/20, soit dans le cas présent avoir une valeur de 20Ah/20h donc de 1A, et permettant d'atteindre à nouveau le palier correspondant à la valeur $U_{min,user}$, comme illustré en figure 3 qui montre l'évolution de la tension en fonction du temps).

Selon le procédé de gestion de la présente invention, il est ensuite proposé de repartir sur un premier ensemble d'opérations de charges et de décharges pendant une durée de temps $E_1$. Au début de cette durée $E_1$, il est nécessaire de mettre en place une charge à courant nominal, d'une quantité d'Ah chargés égale au nombre d'A.h nécessaire à une décharge maximale de l'application soit 10A.h. Lors de cette charge, la valeur de tension maximale $U_{max}$ (t) évolue de telle manière à dépasser la tension maximale $U_{max,user}$ (en raison de l'accroissement de la résistance interne Ri) comme illustré en figure 4 montrant l'évolution de la tension en fonction du temps. Ainsi la valeur de tension maximale initiale $U_{max,user}$ est remplacée par une nouvelle valeur de tension maximale $U_{max,1}$ en début d'opérations sur ce premier ensemble d'une durée $E_1$.

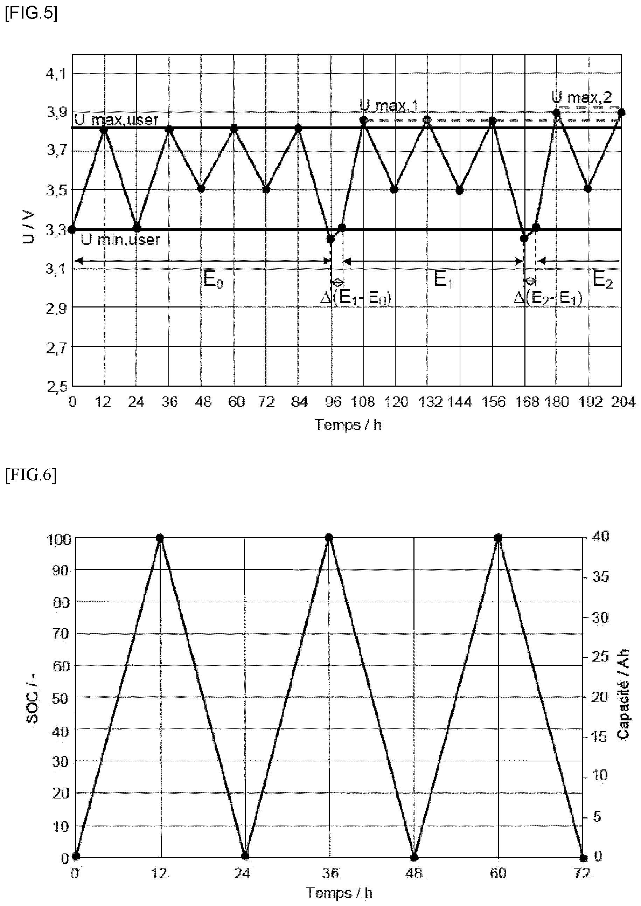

La figure 5 illustre l'évolution de la tension au cours du temps du premier ensemble de charges et de décharges sur une durée de temps $E_1$, et ce jusqu'à une nouvelle détection de passage de tension minimale inférieure à la tension $U_{min,user}$. Selon le procédé de la présente invention, on procède à nouveau à l'application d'une charge lente au cours d'une durée $\Delta(E_2-E_1)$. Il est à nouveau proposé de repartir sur un nouvel ou deuxième ensemble d'opérations de charges et de décharges durant un temps $E_2$. Au début de cet ensemble, une charge à courant nominal d'une valeur égale au nombre d'A.h est nécessaire à une décharge maximale d'application soit 10A.h. La valeur de tension maximale initiale $U_{max,1}$ est remplacée par une nouvelle valeur de tension maximale $U_{max,2}$ pour continuer le fonctionnement d'opérations sur cet ensemble $E_2$. Le processus peut alors être renouvelé durant toute la durée de fonctionnement de l'accumulateur, la limite du procédé étant atteinte lorsque la tension $U_{max,N}$ au cours d'un ensemble d'opérations atteint la valeur limite maximale $U_{max-BMS}$.

Il a précédemment été indiqué que la valeur $U_{max,user}$ devait être déterminée en début de processus.

Le Demandeur décrit ci-après un exemple de procédé de détermination de cette valeur $U_{max,user}$ directement corrélée à la détermination du paramètre $SOC_{max-user}$.

Il est à noter également que le paramètre $SOC_{max\_user}$ est à la fois fonction de l'application et de l'usage et est défini par le fabricant en début de vie.

Ce paramètre doit prendre en compte l'énergie nécessaire au bon fonctionnement de l'application. Au mieux ce paramètre $SOC_{max\_user}$ sera dimensionné pour que l'accumulateur puisse fournir en une fois l'énergie maximum que devra fournir l'accumulateur au cours de sa vie. Par ailleurs il doit aussi prendre en compte la possibilité de charge pour que chaque jour cette quantité maximale d'énergie puisse être restituée : par exemple dans le cas d'une recharge solaire, évaluer le nombre de jour sans soleil possible afin d'en tenir compte dans le choix de ce seuil. De manière générale on prend une marge de l'ordre de 10 à 15% de manière à ce qu'il reste de l'ordre de 10 à 15% d'énergie dans l'accumulateur une fois une décharge maximale réalisée.

Selon la présente invention, il convient de déterminer la valeur du paramètre $SOC_{max\_user}$. Cette valeur peut par exemple reposer sur la détermination préalable de plusieurs paramètres qui sont :

- le profil d'usage et plus particulièrement de la contrainte maximale en énergie/puissance de l'application afin de ne pas fixer une valeur trop faible et ainsi réduire le service proposé par l'application ;

- le surdimensionnement de l'accumulateur par rapport au besoin initial de l'application. Plus le surdimensionnement sera important plus la marge de manoeuvre pour fixer cette valeur sera importante ;

- la connaissance du vieillissement moyen par pas de SOC.

Exemple d'application dans lequel on détermine le paramètre $SOC_{max\,user}$:

Système stationnaire d'énergie, couramment dénommé « Shifting »

Dans cette application on stocke de l'énergie à un moment donné afin de la restituer à un autre moment. Il peut par exemple s'agir d'un système autonome stockant en journée grâce à de l'énergie produite par des panneaux photovoltaïques et restituant cette énergie en soirée pour des besoins domestiques.

Afin de simplifier le concept, le Demandeur considère un exemple dans lequel le système se charge durant 12h et se décharge durant 12h par jour, le besoin journalier étant de 40 Ah et ce besoin étant constant.

Le Demandeur considère également que la ressource solaire est supérieure au besoin (ceci sous-entend que la charge n'est pas limitante et que chaque jour on peut charger les 40 Ah déchargés précédemment).

Pour un accumulateur non surdimensionné le profil d'usage peut être celui illustré en figure 6, représentant une évolution sur 72 heures, pouvant se reproduire tous les jours.

Dans le cas d'un accumulateur non surdimensionné il n'y a aucune marge de manoeuvre pour la définition du

$SOC_{max\_user}$ et $SOC_{max\_user}$ = $SOC_{max\_BMS}$. La présente invention n'est donc pas intéressante dans ce cas de figure.

La présente invention repose sur le fait de pouvoir être en mesure d'assurer un service identique au service initial sur plusieurs années et ce malgré le vieillissement d'accumulateur. L'accumulateur est donc surdimensionné à l'origine pour garantir ce fonctionnement. Dans le présent exemple, il est prévu un surdimensionnement de 50%.

Il convient donc de fixer $SOC_{max\_user}$ entre $SOC_{max\_user}$ = $SOC_{max\_BMS}$ qui correspond à la valeur max utilisable et $SOC_{max\_user}$ = 50% qui correspond à la valeur min que l'on peut fixer. En dessous de cette valeur le système ne pourra pas fournir la capacité nécessaire au service voulu par l'application.

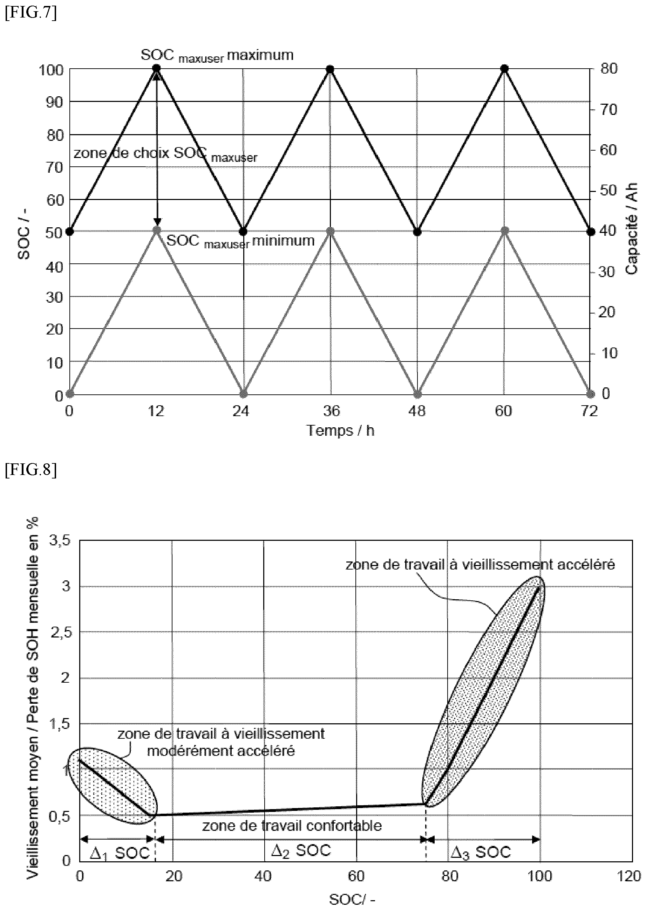

La figure 7 illustre ainsi le profil de l'évolution du SOC en fonction du temps dans le cadre d'un accumulateur surdimensionné et les bornes dans lesquelles on cherche à positionner le paramètre $SOC_{max\_user}$

Le paramètre $SOC_{max\_user}$ étant préalablement borné, il convient de choisir au mieux sa valeur pour bénéficier d'un vieillissement minimum et, pour se faire, estimer le vieillissement moyen par pas de paramètre SOC.

La figure 8 illustre à cet effet, la dépendance du paramètre de vieillissement pour chaque valeur de paramètre SOC. Plus précisément, on détermine un paramètre moyen de vieillissement de l'accumulateur concerné dans des conditions prédéterminées par exemple en tenant compte d'une perte d'état de santé pouvant être mensuelle.

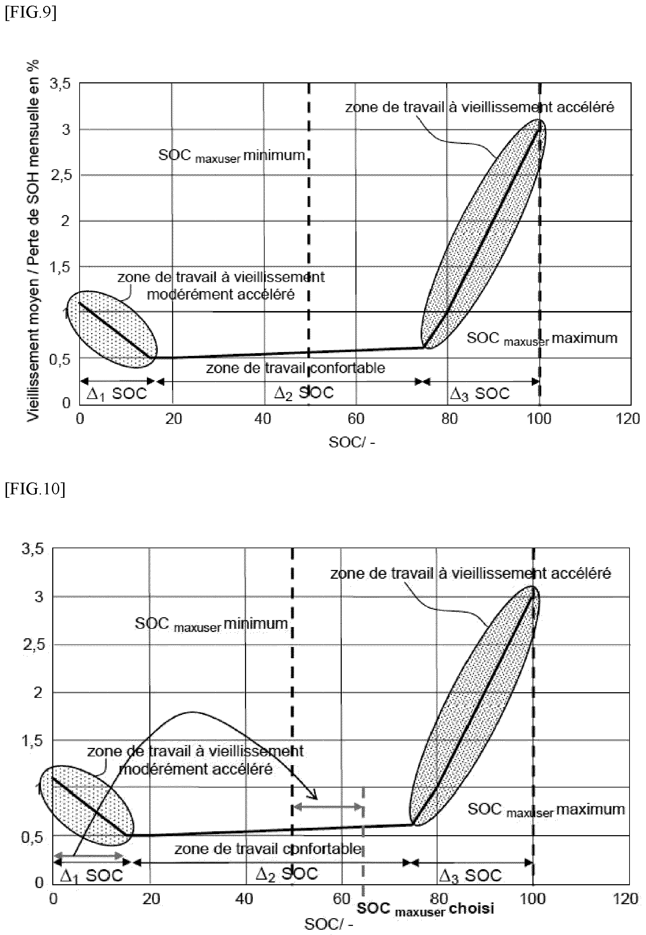

Il ressort de la courbe illustrée en figure 9, que dans certaines gammes de SOC, on distingue différents comportements conduisant à conclure à :

- une zone de travail définie entre un $SOC_{min}$ et un $SOC_{max}$ à vieillissement modérément accéléré soit sur un intervalle $\Delta_1 SOC$ ;

- une zone de travail confortable avec peu de variation dans le paramètre suivi : vieillissement moyen/perte de SOH dans des conditions prédéterminées par exemple mensuelles soit sur un intervalle $\Delta_2 SOC$ ;

- une zone de travail à vieillissement accéléré présentant des variations fortes en termes de paramètre suivi : vieillissement moyen/perte de SOH dans des conditions prédéterminées par exemple mensuelles soit sur un intervalle $\Delta_3 SOC$.

On peut alors reporter sur la courbe de la figure 10, la valeur de $SOC_{max\_user}$ minimum et la valeur de $SOC_{max\_user}$ maximum, soit dans le cas présent respectivement 50 et 100 permettant d'obtenir la courbe d'évolution illustrée en figure 10. En se mettant à $SOC_{max\_user}$ maximum on voit clairement que l'on va travailler dans la zone de travail à vieillissement accéléré et si l'on se positionne à $SOC_{max\_user}$ minimum on va la aussi aller travailler dans la zone de travail à vieillissement modérément accéléré en fin de décharge maximale, ces zones étant clairement deux zones à éviter.

Au vu de la courbe, le meilleur choix de $SOC_{max\_user}$ va se situer à $SOC_{max\_user}$ minimum + la valeur du SOC la plus élevée correspondant à la zone de travail à vieillissement modérément accéléré, soit encore : $SOC_{max\text{-}user}$ choisi = $SOC_{max\text{-}user}$ min + $\Delta_1 SOC$ montré sur la figure 10.

## Revendications

**1.** Procédé de gestion de la tension maximale d'utilisation d'un accumulateur $U_{max}$ (t) au cours du temps apte à fonctionner pour un profil applicatif, défini par une succession d'opérations de charge et/ou de décharge de l'accumulateur, ledit accumulateur étant prédéterminé pour fonctionner entre une tension initiale maximale d'utilisation $U_{max\_user}$ correspondant à une tension de charge maximale et une tension initiale minimale d'utilisation $U_{min\_user}$ correspondant à une tension de fin de décharge maximale, dépendantes de l'application et ledit accumulateur étant couplé à un système de contrôle de l'accumulateur (BMS) dans lequel est définie par le fabricant une tension maximale de fonctionnement $U_{max\_BMS}$ pour ledit accumulateur, le procédé de gestion comprenant les étapes suivantes permettant de faire évoluer au cours du temps ladite tension maximale d'utilisation $U_{max}(t)$ :

    - la détermination d'un profil applicatif ;
    - le suivi de la tension de l'accumulateur U(t) au cours des charges et des décharges selon ledit profil applicatif déterminé,

et **caractérisé en ce que** le procédé comprend en outre les étapes suivantes si, pendant ledit suivi de tension, à la suite d'une opération de décharge, la tension U(t) devient inférieure à la tension de fin de décharge maximale $U_{min\_user}$,

    o un déclenchement d'une opération de charge lente, définie par une opération de charge sans impact de la résistance interne de l'accumulateur, sur la tension, de manière à atteindre à nouveau la tension $U_{min\_user}$,
◦ ensuite, un déclenchement d'une opération de pleine charge, définie par une charge à courant nominal, conduisant à une nouvelle tension maximale d'utilisation $U_{max}(t)$ supérieure à la tension initiale $U_{max\_user}$.

2. Procédé de gestion selon la revendication 1 comprenant une série d'ensemble d'étapes successives suivantes, chaque ensemble étant de durée $E_k$ comprise entre un instant $t_k$ et un instant $t_{k+1}$, chaque ensemble d'étapes comprenant, avec $0 \le k \le N$ :

- une succession de charges et de décharges jusqu"à atteindre une tension de fin de décharge $U_i(t)$ inférieure à la tension $U_{min\_user}$ ;
- l'application de ladite charge lente, définie pendant une durée $\Delta(E_{k+1}-E_k)$, de manière à atteindre à nouveau la tension $U_{min\_user}$ ;
- l'application de ladite pleine charge, conduisant à une nouvelle tension maximale d'utilisation $U_{max,i+1}(t)$ supérieure à la tension initiale $U_{max\_user}$
- la tension maximale d'utilisation $U_{max,N}(t)$ dudit accumulateur étant égale à $U_{max\_BMS}$.

3. Procédé de gestion selon l'une des revendications 1 ou 2, dans lequel la charge lente est égale à C/20, C étant la charge correspondant à la tension $U_{max\_user}$.

4. Procédé de gestion selon l'une des revendications 1 à 3, comprenant des étapes de comptages en ampère heure lors des changements de palier de tension correspondants au dépassement de la tension $U_{min\_user}$.

5. Procédé de gestion selon l'une des revendications 1 à 4, dans lequel le paramètre $U_{max\_user}$ est déterminé à partir du paramètre $SOC_{max\_user}$, ledit paramètre $SOC_{max\_user}$ étant déterminé en fonction des paramètres suivants :

◦ le profil d'usage, défini par un profil applicatif associé à une utilisation donnée dudit accumulateur ;
◦ le surdimensionnement dudit accumulateur ;
◦ le vieillissement dudit accumulateur en fonction de l'état de charge de l'accumulateur SOC.

6. Procédé de gestion selon la revendication 5, dans lequel la détermination du paramètre $SOC_{max\_user}$ comprend les étapes suivantes :

- la détermination dudit profil d'usage exprimé par le paramètre SOC au cours du temps ;
- la détermination du surdimensionnement dudit accumulateur de manière à définir un $SOC_{min-user}$ minimum;
- la détermination du vieillissement prédéterminé en fonction du paramètre SOC définissant par valeurs de SOC croissantes au moins :

◦ une zone de travail à vieillissement modérément accéléré sur un intervalle $\Delta_1 SOC$ ;
◦ une zone intermédiaire de travail confortable avec faibles variations de paramètres de vieillissement sur un intervalle $\Delta_2 SOC$, la valeur $SOC_{max-user}$ minimum étant comprise dans ledit intervalle ;
◦ une zone de travail à vieillissement accéléré sur un intervalle $\Delta_3 SOC$

- la détermination d'une valeur de $SOC_{max-user}$ optimisé par l'équation :

$$SOC_{max-user} \text{ optimisé} = SOC_{max-user} \text{ min} + \Delta_1 SOC$$

7. Procédé de gestion selon l'une des revendications 1 à 6, dans lequel l'accumulateur est surdimensionné pour permettre le bon fonctionnement de l'application à une échéance de temps choisie en fonction du vieillissement.

**Patentansprüche**

1. Verfahren zum Verwalten der maximalen Betriebsspannung eines Akkumulators $U_{max}(t)$ im Laufe der Zeit, funktionsfähig für ein Anwendungsprofil, definiert durch eine Folge von Lade- und/oder Entladevorgängen des Akkumulators, wobei der Akkumulator vorbestimmt ist, um zwischen einer maximalen Anfangsbetriebsspannung $U_{max\_user}$ entsprechend einer maximalen Ladespannung und einer minimalen Anfangsbetriebsspannung $U_{min\_user}$ entsprechend einer maximalen Entladeendspannung in Abhängigkeit von der Anwendung zu funktionieren, und wobei der Akkumulator mit einem Akkumulatorsteuersystem (BMS) gekoppelt ist, in dem eine maximale Arbeitsspannung $U_{max\_BMS}$ für den Akkumulator vom Hersteller definiert ist, wobei das Verwaltungsverfahren die folgenden Schritte umfasst, die es ermöglichen, die maximale Betriebsspannung $U_{max}(t)$ im Laufe der Zeit weiterzuentwickeln:

- Bestimmen eines Anwendungsprofils;
- Verfolgen der Akkumulatorspannung $U(t)$ während des Ladens und Entladens gemäß dem bestimmten Anwendungsprofil,

und **dadurch gekennzeichnet, dass** das Verfahren ferner die folgenden Schritte umfasst, wenn während der Spannungsverfolgung nach einem Entladevorgang die Spannung $U(t)$ unter die maximale Entladeendspannung $U_{min-user}$ abfällt,

◦ Auslösen eines langsamen Ladevorgangs, definiert durch einen Ladevorgang ohne Auswirkung des Innenwiderstands des Akkumulators auf die Spannung, um die Spannung $U_{min\_user}$ wieder zu erreichen,
◦ dann Auslösen eines Vollladevorgangs, definiert durch Laden mit Nennstrom, der zu einer neuen maximalen Betriebsspannung $U_{max}(t)$ führt, die höher ist als die Anfangsspannung $U_{max\_user}$.

2. Verwaltungsverfahren nach Anspruch 1, das eine Reihe von Sätzen von aufeinanderfolgenden Schritten umfasst, wobei jeder Satz eine Dauer $E_k$ zwischen einem Zeitpunkt $t_k$ und einem Zeitpunkt $t_{k+1}$ hat und jeder Satz von Schritten, mit $0 \leq k \leq N$, Folgendes umfasst:

- eine Abfolge von Lade- und Entladevorgängen bis zum Erreichen einer Entladeendspannung $U_i(t)$, die niedriger als die Spannung $U_{min\_user}$ ist;
- Anwenden des langsamen Ladens, das für eine Zeitdauer $\Delta(E_{k+1} - E_k)$ definiert ist, um die Spannung $U_{min\_user}$ wieder zu erreichen;
- Anwenden des Vollladens, das zu einer neuen maximalen Betriebsspannung $U_{max,i+1}(t)$ führt, die höher als die Anfangsspannung $U_{max\_user}$ ist;
- wobei die maximale Betriebsspannung $U_{max,N}(t)$ des Akkumulators gleich $U_{max\_BMS}$ ist.

3. Verwaltungsverfahren nach Anspruch 1 oder 2, wobei das langsame Laden gleich C/20 ist, wobei C die Ladung ist, die der Spannung $U_{max\_user}$ entspricht.

4. Verwaltungsverfahren nach einem der Ansprüche 1 bis 3, das Schritte des Zählens von Amperestunden bei Spannungsstufenwechseln entsprechend dem Überschreiten der Spannung $U_{min\_user}$ umfasst.

5. Verwaltungsverfahren nach einem der Ansprüche 1 bis 4, wobei der Parameter $U_{max\_user}$ anhand des Parameters $SOC_{max\_user}$ bestimmt wird, wobei der Parameter $SOC_{max\_user}$ in Abhängigkeit von den folgenden Parametern bestimmt wird:

◦ Nutzungsprofil, definiert durch ein Anwendungsprofil, das einer gegebenen Verwendung des Akkumulators zugeordnet ist;
◦ Überdimensionierung des Akkumulators;
◦ Alterung des Akkumulators in Abhängigkeit vom Ladezustand des Akkumulators SOC.

6. Verwaltungsverfahren nach Anspruch 5, wobei das Bestimmen des Parameters $SOC_{max\_user}$ die folgenden Schritte umfasst:

- Bestimmen des durch den Parameter SOC ausgedrückten Nutzungsprofils im Laufe der Zeit;
- Bestimmen der Überdimensionierung des Akkumulators, um einen minimalen $SOC_{min-user}$ zu definieren;
- Bestimmen der vorbestimmten Alterung in Abhängigkeit vom Parameter SOC, der durch aufsteigende SOC-Werte mindestens Folgendes definiert:

◦ eine Arbeitszone mit moderat beschleunigter Alterung über ein Intervall $\Delta_1 SOC$;
◦ eine komfortable Zwischenarbeitszone mit geringen Alterungsparameterschwankungen über ein Intervall $\Delta_2 SOC$, wobei der minimale Wert $SOC_{max-user}$ in dem Intervall liegt;
◦ eine Arbeitszone mit beschleunigter Alterung über ein Intervall $\Delta_3 SOC$;

- Bestimmen eines optimierten Wertes von $SOC_{max-user}$ durch die Gleichung:

$$SOC_{\text{max-user}} \text{ optimiert} = SOC_{\text{max-user}} \min + \Delta_1 SOC.$$

**7.** Verwaltungsverfahren nach einem der Ansprüche 1 bis 6, wobei der Akkumulator überdimensioniert ist, um die ordnungsgemäße Funktion der Anwendung zu einem gewählten Zeitpunkt in Abhängigkeit von der Alterung zu ermöglichen.

**Claims**

**1.** A method for managing the maximum operating voltage of an accumulator $U_{max}(t)$ over time capable of functioning for an application profile, defined by a series of charging and/or discharging operations of the accumulator, said accumulator being predetermined to function between an initial maximum operating voltage $U_{max\_user}$ corresponding to a maximum charging voltage and an initial minimum operating voltage $U_{min\_user}$ corresponding to a maximum final discharge voltage, depending on the application and said accumulator being coupled to an accumulator management system (BMS) in which the manufacturer has defined a maximum working voltage $U_{max\_BMS}$ for said accumulator, the managing method comprising the following steps allowing for an evolution over time of said maximum operating voltage $U_{max}(t)$:

- the determination of an application profile;
- the monitoring of the voltage of the accumulator $U(t)$ during charging and discharging according to said determined application profile,

and **characterised in that** the method further comprises the following steps if, during said voltage monitoring, following a discharge operation, the voltage $U(t)$ becomes lower than the maximum final discharge voltage $U_{min\_user}$,

◦ triggering of a slow charge operation, defined by a charge operation without impact of the internal resistance of the accumulator, on the voltage, so as to again reach the voltage $U_{min\_user}$,
◦ then, triggering of a full charge operation, defined by a rated current charge, leading to a new maximum operating voltage $U_{max}(t)$ greater than the initial voltage $U_{max\_user}$.

**2.** The managing method according to claim 1 comprising a series of sets of the following successive steps, each set being of a duration $E_k$ between a moment $t_k$ and a moment $t_{k+1}$, each set of steps comprising, with $0 \leq k \leq N$:

- a succession of charges and discharges until reaching a final discharge voltage $U_i(t)$ lower than the voltage $U_{min\_user}$;
- the application of said slow charge, defined during a duration of $\Delta(E_{k+1} - E_k)$, so as to again reach the voltage $U_{min\_user}$;
- the application of said full charge, leading to a new maximum operating voltage $U_{max,i+1}(t)$ greater than the initial voltage $U_{max\_user}$,
- the maximum operating voltage $U_{max,N}(t)$ of said accumulator being equal to $U_{max\_BMS}$.

**3.** The managing method according to one of claims 1 or 2, wherein the slow charge is equal to C/20, C being the charge corresponding to the voltage $U_{max\ user}$.

**4.** The managing method according to one of claims 1 to 3, comprising steps of counting in ampere hours during voltage step changes corresponding to the excess of the voltage $U_{min\_user}$.

**5.** The managing method according to one of claims 1 to 4, wherein the parameter $U_{max\_user}$ is determined from the parameter $SOC_{max\_user}$, said parameter $SOC_{max\_user}$ being determined depending on the following parameters:

◦ the usage profile, defined by an application profile associated with a given use of said accumulator;
◦ the oversizing of said accumulator;
◦ the ageing of said accumulator depending on the state of charge of the accumulator SOC.

**6.** The managing method according to claim 5, wherein the determination of the parameter $SOC_{max\_user}$ comprises the following steps:

- the determination of said usage profile expressed by the parameter SOC over time;
- the determination of the oversizing of said accumulator so as to define a minimum $SOC_{min\_user}$;
- the determination of the predetermined ageing depending on the parameter SOC defining by increasing SOC values at least:

  ○ a working area for moderately accelerated ageing over an interval $\Delta_1 SOC$;
  ○ a comfortable intermediate working area with small variations of ageing parameters over an interval $\Delta_2 SOC$, the minimum value $SOC_{max\_user}$ being within said interval;
  ○ a working area for accelerated ageing over an interval $\Delta_3 SOC$;

- the determination of an optimised value of $SOC_{max\_user}$ by the equation:

$$\text{optimised } SOC_{max\_user} = SOC_{max\_user}min + \Delta_1 SOC.$$

7. The managing method according to one of claims 1 to 6, wherein the accumulator is oversized to allow for the proper functioning of the application at a time limit chosen depending on the ageing process.

[FIG.1]

[FIG.2]

[FIG.3]

[FIG.4]

[FIG.5]

[FIG.6]

[FIG.7]

[FIG.8]

[FIG.9]

[FIG.10]

**EP 4 009 481 B1**

## RÉFÉRENCES CITÉES DANS LA DESCRIPTION

**Documents brevets cités dans la description**

- WO 2015015083 A1
- US 20040066171 A1
- WO 2019121756 A